# EUROPÄISCHE PATENTSCHRIFT

(11) **EP 2 805 087 B1**
(45) Veröffentlichungstag und Bekanntmachung des Hinweises auf die Patenterteilung: **08.03.2017**
(21) Anmeldenummer: 13702890.8
(22) Anmeldetag: 14.01.2013
(51) Int. Cl.: F16J 15/16, F16J 13/02

(54) **STÜTZRINGANORDNUNG FÜR EINE HOCHDRUCKDICHTUNG**
SUPPORT RING ARRANGEMENT FOR A HIGH-PRESSURE SEAL
DISPOSITIF BAGUE D'APPUI POUR JOINT HAUTE PRESSION

(30) Priorität: 20.01.2012 DE 102012001004
(43) Veröffentlichungstag der Anmeldung: 26.11.2014
(73) Patentinhaber: Uhde High Pressure Technologies GmbH, 58093 Hagen (DE)
(72) Erfinder: NÜNNERICH, Peter, 57080 Siegen (DE); KNAUF, Wilfried, 58313 Herdecke (DE); WEBER, Peter, 58097 Hagen (DE)
(74) Vertreter: ThyssenKrupp Intellectual Property GmbH
(86) Internationale Anmeldenummer: PCT/EP2013/000091
(87) Internationale Veröffentlichungsnummer: WO 2013/107626

(56) Entgegenhaltungen:
- EP-A2- 0 867 647
- GB-A- 1 239 154
- US-A- 3 258 151
- US-A- 4 570 944

## Beschreibung

Die vorliegende Erfindung betrifft eine Stützringanordnung für eine Hochdruckdichtung, wobei die Hochdruckdichtung samt Stützringanordnung für einen axial einschiebbaren oder einschwenkbaren Behälterverschluss vorgesehen ist, der in einem zylindrischen Teil eines Hochdruckbehälters gelagert ist, wobei die Hochdruckdichtung mit Hilfe der Stützringanordnung den zylindrischen Teil des Hochdruckbehälters radial dichtet, und auf die Stützringanordnung und die Hochdruckdichtung ein Maximaldruck von bis zu 10 000 bar mittels eines Fluides ausgeübt wird.

Die Schrift US 4 570 944 betrifft eine Dichtungsanordnung für einen hin und her bewegbaren Druckkolben, wobei die Dichtungsanordnung aus einem Niederdruck-Dichtungsring, einem Nockenring und einem Hochdruck-Dichtungsring besteht, womit ein Druck bis zu ca. 350 bar auf ein Fluid ausgeübt wird. Alle hier erwähnte Ringe haben eine dichtende Wirkung.

Bei der Hochdruckbehandlung von Produkten werden die Produkte in einer Hochdruckkammer von einem Hochdruckmedium beaufschlagt, mit einem Druck von bis zu 10.000 bar behandelt. Auf eine Hochdruckdichtung werden verschiedene Kräfte wie Druckspannung, Zugspannung etc. mit einer hohen Belastungsfrequenz ausgeübt. Weiterhin kann es zu einer erheblichen Dehnung oder Stauchung von Behälter und Behälterverschluß kommen, die unter anderem zu Fugen, Spalten oder sonstigen Öffnungen führen, in die die Dichtung kriechen bzw. fließen kann. Zusätzliche Elemente, wie Stützringkonstruktionen, werden daher eingesetzt, um die Spalte etc. unter Druck zu schließen und damit die Hochdruckdichtung entsprechend abzustützen (US-A-30258 151).

Der Erfindung liegt daher das Problem zugrunde, eine Stützringanordnung für eine Hochdruckdichtung zur Verfügung zu stellen, die für einen axial einschiebbaren oder einschwenkbaren Behälterverschluss, der in einem zylindrischen Teil eines Hochdruckbehälters gelagert ist, bestimmt wird, wobei die Hochdruckdichtung mit Hilfe der Stützringanordnung den zylindrischen Teil des Hochdruckbehälters radial dichtet, und auf die Stützringanordnung und die Hochdruckdichtung ein Maximaldruck von bis zu 10 000 bar mittels eines Fluides ausgeübt wird.

Die Aufgabe wird gelöst durch eine Stützringanordnung (8) für eine Hochdruckdichtung, wobei die Hochdruckdichtung samt Stützringanordnung (8) für einen axial einschiebbaren oder einschwenkbaren Behälterverschluss (1) vorgesehen ist, der in einem zylindrischen Teil eines Hochdruckbehälters gelagert ist, wobei die Hochdruckdichtung mit Hilfe der Stützringanordnung (8) den zylindrischen Teil des Hochdruckbehälters radial dichtet, und auf die Stützringanordnung (8) und die Hochdruckdichtung (4, 5) ein Maximaldruck von bis zu 10 000 bar mittels eines Fluides ausgeübt wird, von der Fluidseite aus gesehen aufweisend,
- eine axiale Fixierung der Anordnung (6),
- einen auf dem Behälterverschluss (1) anliegenden Dichtungsring (4, 5), wobei der Dichtungsring (4, 5) radial vorgespannt ist,
- mindestens einen Stützring, der an seiner senkrecht zur Achse des Behälterverschlusses (1) stehenden Seite eine Stirnfläche (7) ausweist, wobei
- wenigstens eine Stützringanordnung (8), die aus mindestens zwei sich gegeneinander stützend konturierten Formteilen (2, 3) besteht, vorgesehen ist,
- wobei die Formteile aneinander anliegen, und an ihre aneinander anliegenden Seiten zueinander parallele, konische Gegenflächen (12) aufweisen, und
- eine der parallelen, konischen Gegenflächen (12) an der Stirnfläche (7) beginnt.

Eine Stützringanordnung (8) kann im Prinzip aus beliebig vielen Formteilen bestehen, solange deren abstützende Wirkung für Hochdruckdichtungen erzielt wird. Sinnvollerweise gestaltet man die Stützringanordnung (8) mit zwei konturierten Formteilen, die sich gegeneinander abstützen. Die Formteile liegen aneinander an, und diese weisen an ihren aneinander anliegenden Seiten zueinander parallele, konische Gegenflächen (12) auf.

Durch die Konstruktion, dass die Teile der Stützringanordnung (8) an ihren aneinanderliegenden Seiten zueinander parallele, konische Flächen haben, können die Teile der Stützringanordnung (8) aneinander gleiten und damit die Entstehung von Fugen, Spalten oder sonstigen Öffnungen zwischen Behälterverschluß (12) und Behälter verhindern.

Um zu verhindern, dass Teile des Dichtungsrings in sich durch die Weitung ergebende Spalte hineinfließen bzw. extrudieren können, beginnt die parallele, konische Gegenfläche (12) an der Stirnfläche (7). Durch das Aneinandergleiten der zueinander parallelen, konischen Gegenflächen (12) ergibt sich auf diese Weise kein Spalt.

Mindestens eines der Formteile kann durch den Behälterverschluss (1) selbst gebildet werden. Dieses Formteil stützt sich an dem anderen Formteil der Stützringanordnung (8) über parallele, konische Gegenflächen (12) ab.

Eines der Formteile kann auch durch ein lösbares Bauteil des Behälterverschlusses (1) gebildet werden. Solange das lösbare Bauteil des Behälterverschlusses (1) dieselbe Eigenschaft - parallele, konische Gegenflächen - aufweist, wird das lösbare Bauteil dieselbe Wirkung erzielen. Das lösbare Bauteil kann Beispielsweise durch einen Ring, der parallele, konische Gegenflächen aufweist, gebildet werden.

Die Stirnfläche (7) eines der Formteile ist senkrecht zur Achse des Behälterverschlusses (1) angeordnet. Natürlich kann die Stirnfläche (7) auch eine andere Form annehmen, wie z. B. im Mittel mit 90 ± 30° zur Achse des Behälterverschlusses (1) angeordnet sein.

Der Konus der parallelen, konischen Gegenflächen (12) kann einen Schrägungswinkel von 40° bis 80° zur Achse des Behälterverschlusses (1) aufweisen. Zwischen den zueinander parallelen, konischen Gegenflächen (12) ist ein Übergangsbereich (11) vorgesehen, wobei der Übergangsbereich (11) derart gestaltet wird, dass die Formteile nach dem Druckabbau wie vor dem Druckaufbau wieder aneinander anliegen wie in Ausgangsposition.

Beispielsweise kann der Übergangsbereich (11) leicht konisch oder gebogen sein, so dass die Formteile im Übergangsbereich (11) einen nach oben und einen nach unten gewölbten Raum bilden, wobei der Übergangsbereich (11) auch eine beliebige andere Form annehmen, solang er seine Funktion erfüllt.

Vorzugsweise kann der Übergangsbereich (11) derart gestaltet werden, dass das äußere Formteil (3) und das innere Formteil (2) im Übergangsbereich (11) zueinander parallele Flächen aufweisen. Diese parallelen Flächen können auch parallel zur Achse des Behälterverschlusses (1) sein, wobei das äußere Formteil (3), das von der Achse des Behälterverschlusses (1) weiter entfernte Teil, und das innere Formteil (2), das näher der Achse des Behälterverschlusses(1) als das äußere Formteil (3), meint.

Idealerweise verfügt das äußere Formteil (3) an der dem Dichtungsring (4) zugewandten Seite über eine Einführschräge.

Die Stützringanordnung (8) kann aus mehr als zwei Teilen bestehen, hierbei kann das äußere Formteil (3) - ein Ring - beispielsweise wiederum aus zwei Teileringen bestehen, die zusammengesetzt werden, in dem er mit einem in Umfangsrichtung radial sich erstreckenden Schlitz (9) und eine in Umfangsrichtung durchgehende Aussparung am äußeren Umfang ausgestaltet wird, wobei die geschlitzten Teilen des Rings durch eine Spannvorrichtung (10) in der Aussparung zusammen gehalten werden. Die Spannvorrichtung (10) ermöglicht den geschlitzten Teilen des Rings nach dem Druckabbau sich wieder sicher zusammenzufügen.

Die in Umfangsrichtung des Rings vorgesehene Aussparung am äußeren Umfang kann abhängig von der Spannvorrichtung (10) unterschiedlich gestaltet werden. Der Querschnitt der Aussparung kann z. B. eine rechteckige, runde, ovale Form oder eine andere Geometrie annehmen, in der man die geschlitzten Teile des Rings mittels einer Spannvorrichtung (10) zusammenhalten kann.

Die Spannvorrichtung (10) kann beispielhaft ein Polymer- oder ein Elastomer-Ring sein. Außerdem können als geeignete Elemente für die Spannvorrichtung (10) zum Beispiel ein passendes Drahtseil oder eine Wicklung aus Draht, Schnur oder eine Federklammer dienen.

Eine axiale Fixierung der Anordnung (6) ist vorgesehen. Diese Fixierung kann durch einen Ring / Frontring gebildet werden.

Bei einem Druck von bis zu 10 000 bar sollten beide Formteile (2, 3) aus einer hochfesten Legierung bestehen. Wobei es vorteilhaft ist, wenn das äußere Formteil (3) ein niedrigeres E-Modul (Elastizitätsmodul) als Behälter und / oder Behälterverschluß (1) aufweist.

Mindestens eines der Formteile besteht vorzugsweise aus einer Kupfer-Legierung oder Titan-Legierung. Mindestens einer der Formteile besteht vorzugsweise aus Stahl.

Die Hochdruckdichtung mit Stützringanordnung (8) ist vorzugsweise auf dem Behälterverschluss (1) fixiert.
Fig. 1a stellt die Hochdruckdichtung mit der Stützringanordnung (8) auf einem Behälterverschluss (1) dar.
Fig. 1b ist eine Vergrößerung des Schnitts A von Fig. 1 a.
Fig. 1c ist eine detaillierte Darstellung der Hochdruckdichtung mit der Stützringanordnung (8).
Fig. 2 stellt die Stützringanordnung (8) mit den beiden Teilringe (2, 3) dar.
Fig. 3a stellt einen geschlitzten äußeren Ring dar.
Fig. 3b stellt die Aussparung mit der Spannvorrichtung (10) dar.

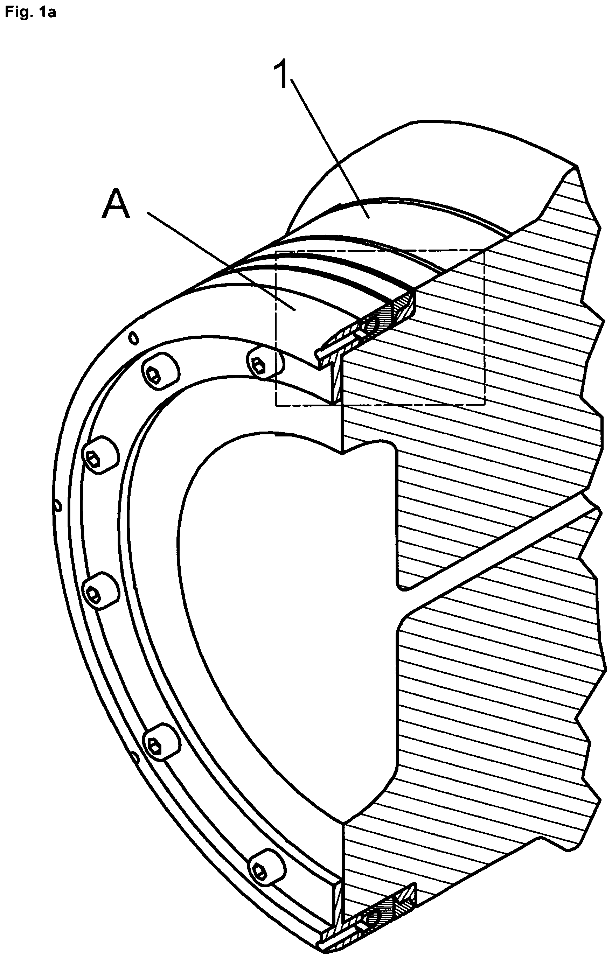

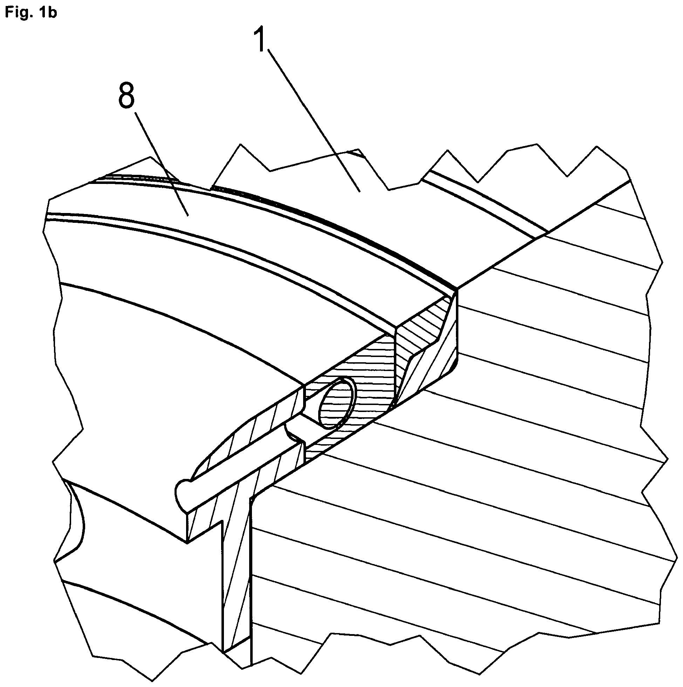

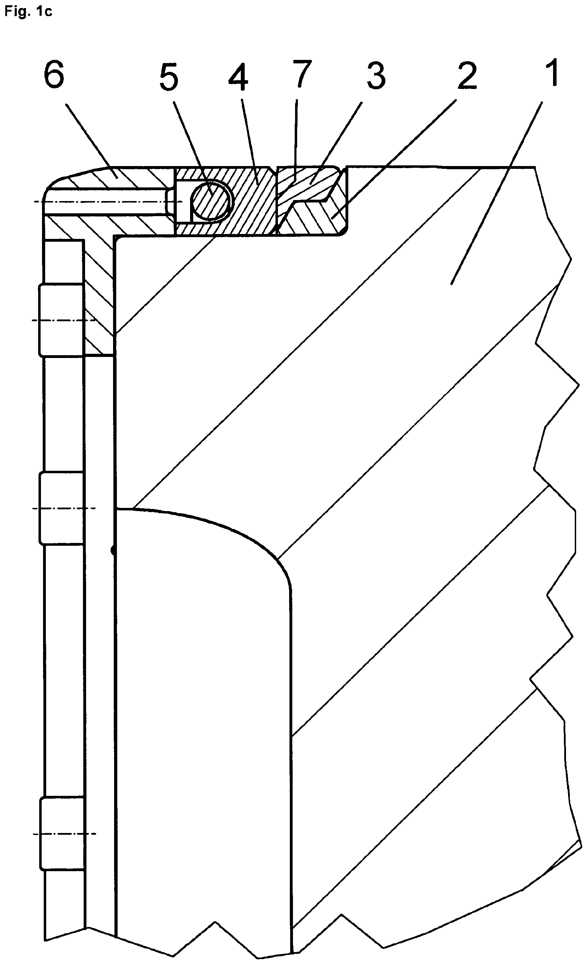

In Fig. 1a, 1b, 1c sind die Hochdruckdichtung und die Stützringanordnung (8) auf dem Behälterverschluss (1) dargestellt. Von der Fluidseite aus gesehen umfasst die Hochdruckdichtung und die Stützringanordnung (8) einen Frontring (6), einen auf dem Behälterverschluss (1) anliegenden Dichtungsring (4), wobei der Dichtungsring (4) eine Nut der Form C aufweist, und die Nut einen O-Ring (5) umfasst. Dem Dichtungsring (4) anliegend ist eine Stützringanordnung (8) vorgesehen, die aus zwei Teilringen - einem inneren Stützring (2) und einem äußeren Stützring (3) - besteht. Die beiden Teilringe liegen aneinander. Der Frontring (6) ist mit Bohrungen und Fixiervorrichtungen versehen. Mittels der Fixiervorrichtung am Frontring (6) werden die Hochdruckdichtung und die Stützringanordnung (8) auf dem Behälterverschluss (1) axial befestigt.

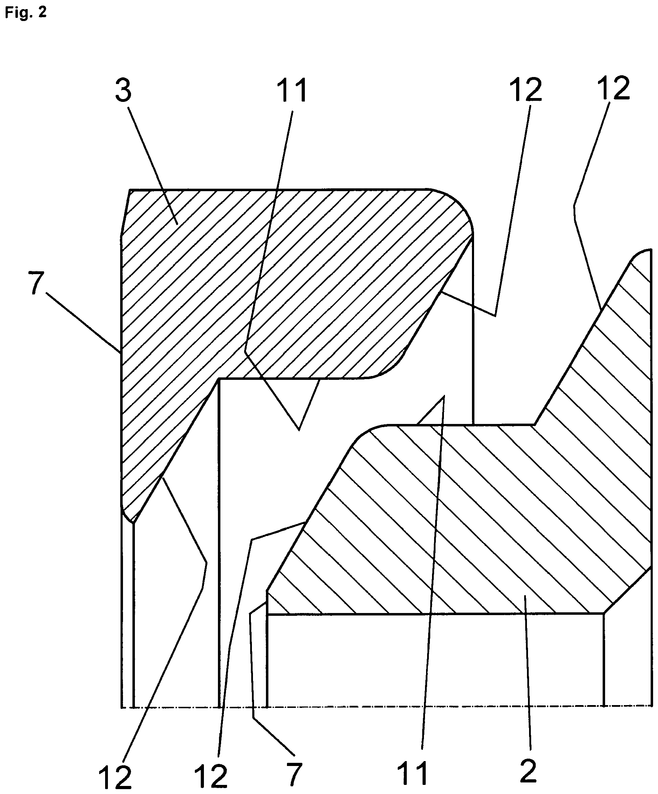

In Fig. 2 haben der innere Stützring (2) / das innere Formteil und der äußere Stützring (3) / das äußere Formteil an ihren aneinanderliegenden Seiten zueinander parallele Flächen (12), und diese parallele Flächen (12) beginnen an der Stirnfläche (7), wobei der innere Stützring (2) / das innere Formteil und der äußere Stützring (3) / das äußere Formteil an ihren aneinanderliegenden Seiten jeweils einen Konus mit einem gleichen Schrägungswinkel auf weisen, und zwischen den zueinander parallelen Flächen ist ein Übergangsbereich (11) vorgesehen, wobei der Übergangsbereich (11) so gestaltet ist, dass der innere Stützring (2) / das innere Formteil und der äußere Stützring (3) / das äußere Formteil im Übergangsbereich (11) zueinander parallele Flächen aufweisen. Durch diese Ausführungsform wird die radiale Last auf die Ringbreite besser verteilt, und zusätzlich die radiale Lage im drucklosen Zustand genau definiert.

In Fig. 2 ist nur eine Ausgestaltungsmöglichkeit für die Stützringanordnung (8) dargestellt. Die Stützringe können allerdings auch so angeordnet sein, dass die Stirnfläche (7) des inneren Stützrings (2) / das innere Formteil dem Dichtungsring (4), und die Stirnfläche (7) des äußeren Stützrings (3) / das äußere Formteil dem Behälterverschluss (1), anliegend angeordnet sind. Dies beeinflusst nicht die stützende Wirkung der zusammengesetzten Stützringanordnung (8).

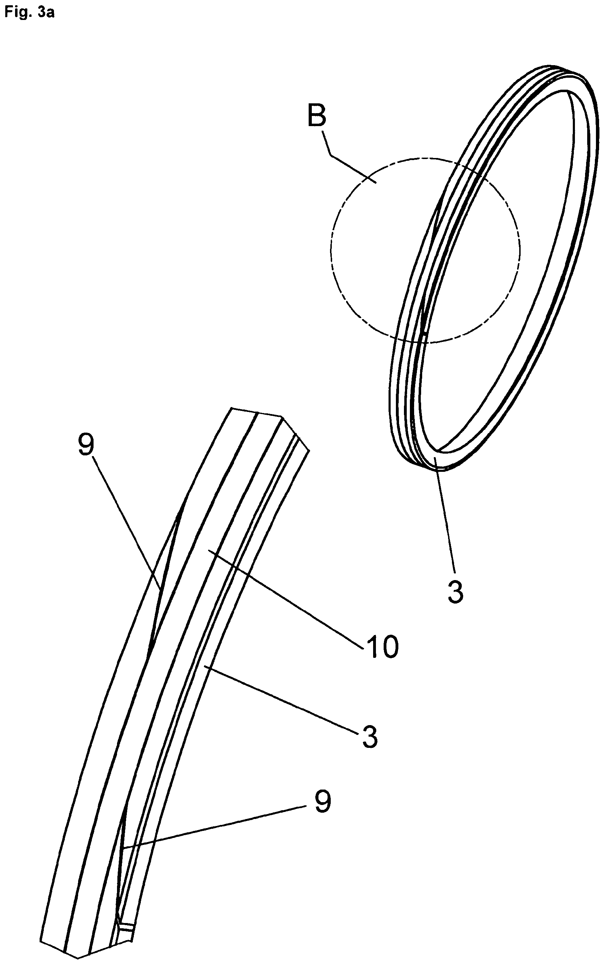

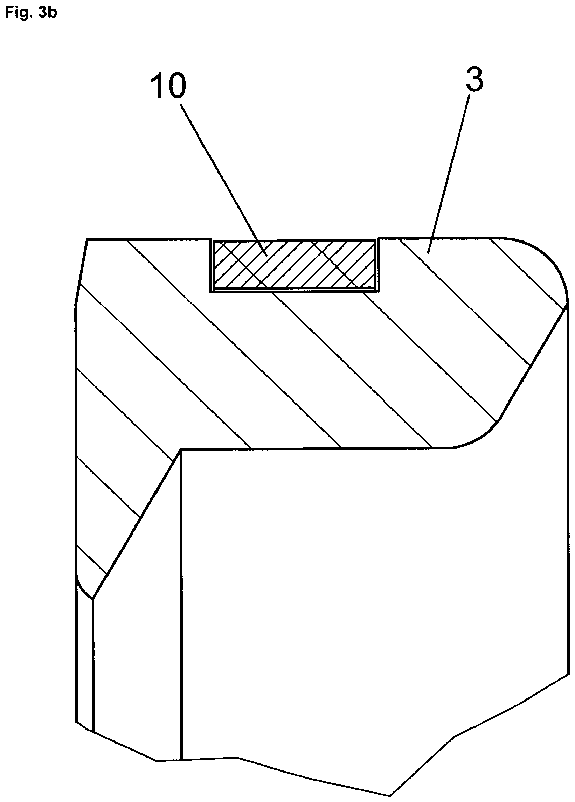

In Fig. 3a, 3b wird der geschlitzte äußere Stützring (3) / das äußere Formteil in verschiedenen Perspektiven dargestellt. Die Fig. 3a zeigt die Vergrößerung der geschlitzten Stelle (Ausschnitt B) des äußeren Stützrings (3) / das äußere Formteil, wobei sich der Schlitz (9) in Umfangsrichtung radial erstreckt. Die auf den äußeren Stützring (3) wirkende Zugspannung wird infolge dieser Ausführung weitgehend eliminiert.

In Umfangsrichtung des äußeren Stützrings (3) / das äußere Formteil am äußeren Umfang ist eine Aussparung vorgesehen, worin die geschlitzten Teile des äußeren Stützrings (3) / das äußere Formteil durch eine Spannvorrichtung (10) wie zum Beispiel einen Polymer-Ring festgehalten werden. Die Fig. 3b zeigt eine mögliche Aussparung samt Spannvorrichtung (10) mit einem rechteckigen Querschnitt.

### Bezugszeichenliste:

- 1: Behälterverschluss
- 2: Innerer Stützring / Inneres Formteil
- 3: Äußerer Stützring / Äußeres Formteil
- 4: Dichtungsring
- 5: O-Ring
- 6: Axiale Fixierung / Frontring
- 7: Stirnfläche
- 8: Stützringanordnung
- 9: Schlitz
- 10: Spannvorrichtung
- 11: Übergangsbereich
- 12: Parallele, konische Gegenfläche

## Patentansprüche

1. Stützringanordnung für eine Hochdruckdichtung, wobei die Hochdruckdichtung samt Stützringanordnung für einen axial einschiebbaren oder einschwenkbaren Behälterverschluss (1) vorgesehen ist, der in einem zylindrischen Teil eines Hochdruckbehälters gelagert ist, wobei die Hochdruckdichtung mit Hilfe der Stützringanordnung den zylindrischen Teil des Hochdruckbehälters radial dichtet, und auf die Stützringanordnung und die Hochdruckdichtung ein Maximaldruck von bis zu 10 000 bar mittels eines Fluides ausgeübt wird, von der Fluidseite aus gesehen aufweisend,
• eine axiale Fixierung der Anordnung (6),
• einen auf dem Behälterverschluss (1) anliegenden Dichtungsring (4, 5), wobei der Dichtungsring (4, 5) radial vorgespannt ist,
• mindestens einen Stützring, der an seiner senkrecht zur Achse des Behälterverschlusses (1) stehenden Seite eine Stirnfläche (7) aufweist, **dadurch gekennzeichnet, dass**
• wenigstens eine Stützringanordnung (8), die aus mindestens zwei sich gegeneinander stützend konturierten Formteilen (2, 3) besteht, vorgesehen ist,
• wobei die Formteile aneinander anliegen, und an ihre aneinander anliegenden Seiten zueinander parallele, konische Gegenflächen (12) aufweisen, und
• eine der parallelen, konischen Gegenflächen (12) an der Stirnfläche (7) beginnt
• wobei zwischen den zueinander parallelen, konischen Gegenflächen (12) ein Übergangsbereich (11) vorgesehen ist.

2. Stützringanordnung nach Anspruch 1, **dadurch gekennzeichnet, dass** mindestens eines der Formteile durch den Behälterverschluss (1) selbst gebildet wird.

3. Stützringanordnung nach Anspruch 1, **dadurch gekennzeichnet, dass** mindestens einer der Formteile durch ein lösbares Bauteil des Behälterverschlusses (1) gebildet wird.

4. Stützringanordnung nach Anspruch 1, **dadurch gekennzeichnet, dass** die Stirnfläche (7) senkrecht zur Achse des Behälterverschlusses (1) angeordnet ist.

5. Stützringanordnung nach Anspruch 1, **dadurch gekennzeichnet, dass** die Stirnfläche (7) im Mittel geneigt mit 90 ± 30° zur Achse des Behälterverschlusses (1) angeordnet ist.

6. Stützringanordnung nach Anspruch 2 oder 3, **dadurch gekennzeichnet, dass** der Konus einen Schrägungswinkel von 40° bis 80° zur Achse des Behälterverschlusses (1) aufweist.

7. Stützringanordnung nach Anspruch 1, **dadurch gekennzeichnet, dass** der Übergangsbereich (11) derart gestaltet wird, dass die Formteile nach dem Druckabbau wie vor dem Druckaufbau wieder aneinander anliegen wie in Ausgangsposition.

8. Stützringanordnung nach Anspruch 7, **dadurch gekennzeichnet, dass** der Übergangsbereich (11) vorzugsweise derart gestaltet wird, dass die Formteile im Übergangsbereich (11) zueinander parallele, Flächen aufweisen.

9. Stützringanordnung nach Anspruch 1, **dadurch gekennzeichnet, dass** mindestens eine der Formteile einen in Umfangsrichtung radial sich erstreckenden Schlitz (9) und eine in Umfangsrichtung durchgehende Aussparung am äußeren Umfang aufweisen, wobei die geschlitzten Teile durch eine Spannvorrichtung (10) in der Aussparung zusammen gehalten werden.

10. Stützringanordnung nach Anspruch 1, **dadurch gekennzeichnet, dass** mindestens eines der Formteile aus einer hochfesten Legierung besteht und einen niedrigeren E-Modul als der Behälter und Behälterverschluss (1) aufweist.

11. Stützringanordnung nach Anspruch 10, **dadurch gekennzeichnet, dass** mindestens eines der Formteile vorzugsweise aus einer Kupfer-Legierung oder Titan-Legierung besteht.

12. Stützringanordnung nach Anspruch 10, **dadurch gekennzeichnet, dass** mindestens eines der Formteile vorzugsweise aus Stahl besteht.

13. Stützringanordnung nach einem der Ansprüche 1 bis 12, **dadurch gekennzeichnet, dass** die Hochdruckdichtung mit Stützringanordnung (8) vorzugsweise auf dem Behälterverschluss (1) fixiert ist.

## Claims

1. Support ring arrangement for a high-pressure seal, the high-pressure seal including the support ring arrangement being provided for a container closure (1) which can be pushed in or pivoted in axially and is mounted in a cylindrical part of a high-pressure container, the high-pressure seal sealing the cylindrical part of the high-pressure container radially with the aid of the support ring arrangement, and a maximum pressure of up to 10 000 bar being exerted by means of a fluid on the support ring arrangement and the high-pressure seal, having, as viewed from the fluid side,
• an axial fixing of the arrangement (6),
• a sealing ring (4, 5) which bears on the container closure (1), the sealing ring (4, 5) being prestressed radially,
• at least one support ring which has an end face (7) on its side which lies perpendicularly with respect to the axis of the container closure (1),
**characterized in that**
• at least one support ring arrangement (8) is provided which consists of at least two shaped parts (2, 3) which are contoured so as to be supported against one another,
• the shaped parts bearing against one another, and having conical mating faces (12) which are parallel to one another on their sides which bear against one another, and
• one of the parallel, conical mating faces (12) beginning on the end face (7),
• wherein a transition region (11) is arranged between the conical mating faces (12) which are parallel to one another.

2. Support ring arrangement according to Claim 1, **characterized in that** at least one of the shaped parts is formed by the container closure (1) itself.

3. Support ring arrangement according to Claim 1, **characterized in that** at least one of the shaped parts is formed by a releasable component of the container closure (1).

4. Support ring arrangement according to Claim 1, **characterized in that** the end face (7) is arranged perpendicularly with respect to the axis of the container closure (1).

5. Support ring arrangement according to Claim 1, **characterized in that** the end face (7) is arranged inclined on average at 90 ± 30° with respect to the axis of the container closure (1).

6. Support ring arrangement according to Claim 2 or 3, **characterized in that** the cone has an inclination angle of from 40° to 80° with respect to the axis of the container closure (1).

7. Support ring arrangement according to Claim 1, **characterized in that** the transition region (11) is designed in such a way that, after the dissipation of pressure as before the build-up of pressure, the shaped parts bear against one another again as in the starting position.

8. Support ring arrangement according to Claim 7, **characterized in that** the transition region (11) is preferably designed in such a way that the shaped parts have faces which are parallel to one another in the transition region (11).

9. Support ring arrangement according to Claim 1, **characterized in that** at least one of the shaped parts has a slot (9) which extends radially in the circumferential direction and a cut-out which is continuous in the circumferential direction on the outer circumference, the slotted parts being held together in the cut-out by way of a tensioning apparatus (10).

10. Support ring arrangement according to Claim 1, **characterized in that** at least one of the shaped parts is composed of a high-strength alloy and has a lower modulus of elasticity than the container and container closure (1).

11. Support ring arrangement according to Claim **10, characterized in that** at least one of the shaped parts is preferably composed of a copper alloy or a titanium alloy.

12. Support ring arrangement according to Claim 10, **characterized in that** at least one of the shaped parts is preferably composed of steel.

13. Support ring arrangement according to one of Claims 1 to 12, **characterized in that** the high-pressure seal with support ring arrangement (8) is preferably fixed on the container closure (1).

## Revendications

1. Dispositif de bague d'appui pour un joint de haute pression, le joint de haute pression étant prévu, avec le dispositif de bague d'appui, pour une fermeture de récipient (1) pouvant être rentrée par coulissement dans le plan axial ou pouvant pivoter vers l'intérieur et étant disposée dans une partie cylindrique d'un récipient de haute pression, le joint de haute pression étanchéifiant la partie cylindrique du récipient de haute pression dans le plan radial à l'aide du dispositif de bague d'appui et une pression maximale pouvant atteindre 10 000 bars pouvant s'exercer à l'aide d'un fluide sur le dispositif de bague d'appui et le joint de haute pression, comportant, vu depuis le côté de fluide :
- une fixation axiale du dispositif (6) ;
- une bague d'étanchéité (4, 5) reposant sur la fermeture de récipient (1), la bague d'étanchéité (4, 5) étant précontrainte dans le plan radial ;
- au moins une bague de soutien comportant une surface avant (7) au niveau de son côté s'étendant perpendiculairement à l'axe de la fermeture de récipient (1) ;
**caractérisé en ce que** :
- au moins un dispositif de bague d'appui (8) composé d'au moins deux pièces moulées (2, 3) contourées s'appuyant l'une contre l'autre est prévu ;
- les pièces moulées reposant l'une contre l'autre et comportant au niveau de leurs côtés reposant l'un contre l'autre des contre-surfaces (12) coniques parallèles entre elles ; et
- une des contre-surfaces (12) coniques parallèles commençant au niveau de la surface avant (7) ;
- une zone de transition (11) étant prévue entre les contre-surfaces (12) coniques parallèles entre elles.

2. Dispositif de bague d'appui selon la revendication 1, **caractérisé en ce qu'**au moins une des pièces moulées est formée elle-même par la fermeture de récipient (1).

3. Dispositif de bague d'appui selon la revendication 1, **caractérisé en ce qu'**au moins une des pièces moulées est formée par un composant amovible de la fermeture de récipient (1).

4. Dispositif de bague d'appui selon la revendication 1, **caractérisé en ce que** la surface avant (7) est disposée perpendiculairement à l'axe de la fermeture de récipient (1).

5. Dispositif de bague d'appui selon la revendication 1, **caractérisé en ce que** la surface avant (7) est disposée en moyenne de façon inclinée avec 90 ± 30° par rapport à l'axe de la fermeture de récipient (1).

6. Dispositif de bague d'appui selon la revendication 2 ou 3, **caractérisé en ce que** le cône comporte un angle oblique de 40° à 80° par rapport à l'axe de la fermeture de récipient (1).

7. Dispositif de bague d'appui selon la revendication 1, **caractérisé en ce que** la zone de transition (11) est agencée de telle sorte que les pièces moulées reposent de nouveau l'une contre l'autre après la baisse de pression, comme avant la hausse de pression, comme dans la position de départ.

8. Dispositif de bague d'appui selon la revendication 7, **caractérisé en ce que** la zone de transition (11) est agencée de préférence de telle sorte que les pièces moulées comportent dans la zone de transition (11) des surfaces parallèles entre elles.

9. Dispositif de bague d'appui selon la revendication 1, **caractérisé en ce qu'**au moins une des pièces moulées comporte une fente (9) s'étendant dans le plan radial dans la direction périphérique et un évidement traversant dans la direction périphérique au niveau de la périphérie extérieure, les pièces fendues étant maintenues ensemble dans l'évidement par un dispositif de serrage (10).

10. Dispositif de bague d'appui selon la revendication 1, **caractérisé en ce qu'**au moins une des pièces moulées se compose d'un alliage à hautes performances et présente un module d'élasticité inférieur à celui du récipient et de la fermeture de récipient (1).

11. Dispositif de bague d'appui selon la revendication 10, **caractérisé en ce qu'**au moins une des pièces moulées se compose de préférence d'un alliage de cuivre ou d'un alliage de titane.

12. Dispositif de bague d'appui selon la revendication 10, **caractérisé en ce qu'**au moins une des pièces moulées est de préférence en acier.

13. Dispositif de bague d'appui selon l'une quelconque des revendications 1 à 12, **caractérisé en ce que** le joint de haute pression avec dispositif de bague d'appui (8) est fixé au de préférence sur la fermeture de récipient (1).
